(19) Europäisches Patentamt / European Patent Office / Office européen des brevets

(11) **EP 1 545 065 B1**

(12) **FASCICULE DE BREVET EUROPEEN**

(45) Date de publication et mention
de la délivrance du brevet:
**30.01.2008 Bulletin 2008/05**

(51) Int Cl.:
***H04L 12/413*** *(2006.01)*

(21) Numéro de dépôt: **04106593.9**

(22) Date de dépôt: **15.12.2004**

(54) **Réseau de communication redondant de type Ethernet full-duplex commuté et procédé de gestion de la redondance d'un tel réseau notamment dans le domaine avionique**

Redundantes Vollduplex Ethernet Vermittlungskommunikationsnetzwerk und Redundanzverwaltung eines derartigen Netzwerks, besonders in der Avionik

Redundant switched full-duplex ethernet type communication network and redundancy management of said network, particularly in avionics

(84) Etats contractants désignés:
**AT BE BG CH CY CZ DE DK EE ES FI FR GB GR HU IE IS IT LI LT LU MC NL PL PT RO SE SI SK TR**

(30) Priorité: **17.12.2003 FR 0351094**

(43) Date de publication de la demande:
**22.06.2005 Bulletin 2005/25**

(73) Titulaire: **AIRBUS France**
**31060 Toulouse (FR)**

(72) Inventeurs:
• **Gambardella, Eddie**
**31700 Blagnac (FR)**
• **Monnier, Stéphane**
**31700 Blagnac (FR)**

(74) Mandataire: **Poulin, Gérard et al**
**Société BREVATOME**
**3, rue du Docteur Lancereaux**
**75008 Paris (FR)**

(56) Documents cités:
**WO-A-99/63701**     **US-A- 4 780 869**
**US-A- 5 784 375**     **US-A1- 2003 147 377**

**Description**

**DOMAINE TECHNIQUE**

La présente invention concerne un réseau de communication redondant de type Ethernet full-duplex commuté, et un procédé de gestion de la redondance d'un tel réseau, notamment dans le domaine avionique.

**ÉTAT DE LA TECHNIQUE ANTÉRIEURE**

Le réseau Ethernet, qui est la référence dans le monde des réseaux de communication, permet d'envoyer des données sous forme numérique par paquets, ou "trames", une trame étant définie comme un ensemble de données envoyé en une seule fois sur le réseau. Les données de chaque trame ne sont pas interprétées. Le réseau les transporte sans connaître leur signification. Une trame est constituée de deux types de données : des données réseaux qui sont utilisés pour acheminer la trame à bon port et des données utiles qui sont la "charge utile" de la trame.

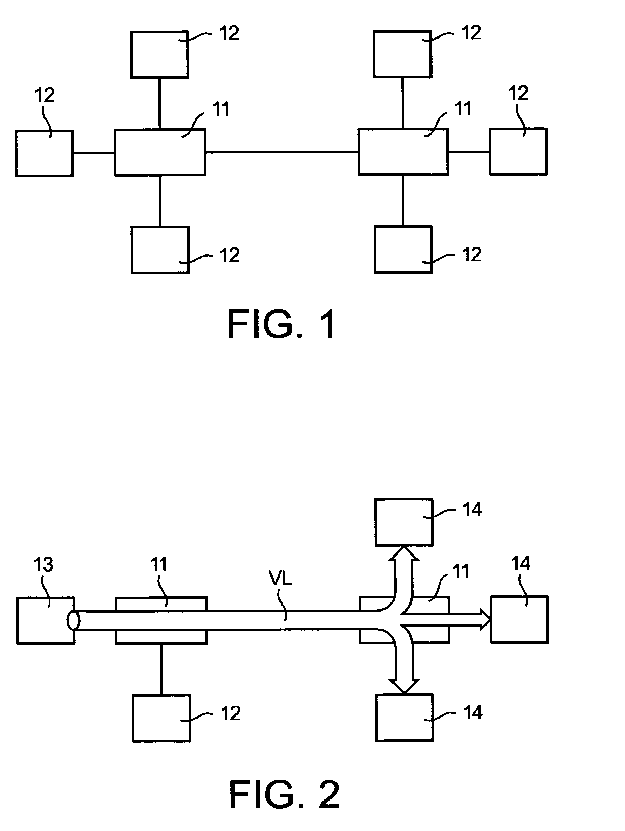

La figure 1 illustre un réseau Ethernet constitué de deux commutateurs 11 interconnectés entre eux et reliés chacun à trois équipements abonnés 12 en mode point à point. Le fonctionnement d'un tel réseau est simple. Chaque abonné du réseau peut émettre des trames à tout moment sous forme numérique vers un, ou plusieurs autres abonnés. Lorsque les trames sont reçus par un commutateur 11, les données "information réseau" sont analysées pour connaître le ou les équipements destinataires. Les trames sont alors commutées vers ces équipements.

Le réseau de communication de type Ethernet "full-duplex" (bidirectionnel simultané) commuté tel que défini dans le document référencé [1] en fin de description, qui est basé sur le standard Ethernet full-duplex commuté décrit par la norme IEEE802.3, offre des fonctionnalités améliorées par rapport à ce standard pour permettre une meilleure fiabilité dans la transmission des informations, notamment dans le domaine avionique. Ce réseau offre en effet un temps de transmission déterministe obtenu par le rajout de services de communication sur le réseau Ethernet. Cet aspect déterministe utilise un concept de lien virtuel, qui est une représentation conceptuelle d'une liaison d'un équipement source vers au moins un équipement destinataire.

Comme illustré sur la figure 2, un tel concept de lien virtuel (VL) permet d'isoler les transferts de données entre un équipement source 13 et des équipements destinataires 14. Un lien virtuel est vu comme un "tuyau" sur le réseau. Un lien virtuel est caractérisé par :

- un sens de transfert, le lien virtuel étant mono-directionnel,
- un équipement source unique 13,
- un ou plusieurs équipements destinataires 14,
- une bande passante (nombre maximum de paquets et leur taille par seconde) figée,
- un temps maximum garanti de transfert des paquets d'un équipement source 13 vers un équipement destinataire 14, quel que soit le comportement du reste du réseau, chaque lien virtuel ayant son propre temps de transfert,
- un chemin figé sur le réseau,
- un identifiant unique.

Le commutateur 11 connaît, par une table de configuration statique, les liens virtuels qu'il doit commuter ainsi que le nombre de paquets autorisés pour un lien virtuel.

Ce concept de lien virtuel permet de figer les communications entre les équipements en configurant les routes et les bandes passantes allouées aux liens virtuels. Ainsi, le flux formé par un lien virtuel est assuré de ne pas être perturbé par les autres flux partageant les mêmes liens physiques tout au long de sa route dans le réseau. De plus, ce concept de lien virtuel permet, par une gestion centralisée des flux, de s'assurer que la somme des bandes passantes allouées aux liens virtuels sur un même lien physique ne dépasse pas les capacités de la technologie de celui-ci.

Les liaisons bord d'un aéronef utilisant un tel réseau Ethernet full-duplex commuté peuvent être réalisées de façon redondante selon le procédé décrit dans le document référencé [2] en fin de description. Dans ce cas, deux équipements, un équipement source et un équipement destinataire, communiquent par l'intermédiaire d'au moins deux réseaux élémentaires indépendants RE1 et RE2. De façon connue, la redondance est réalisée trame par trame sur chacun desdits réseaux. Sur un lien virtuel, l'équipement source envoie successivement des trames d'informations vers l'équipement destinataire. Chacune desdites trames est envoyée, avec un contenu identique, sur chacun des réseaux RE1 et RE2. En fonction de la charge et de la configuration desdits réseaux, ces deux trames identiques peuvent arriver à l'équipement destinataire à des instants différents. On se place ici dans le cas où les deux réseaux fonctionnent correctement et par conséquent les deux trames émises arrivent à l'équipement destinataire.

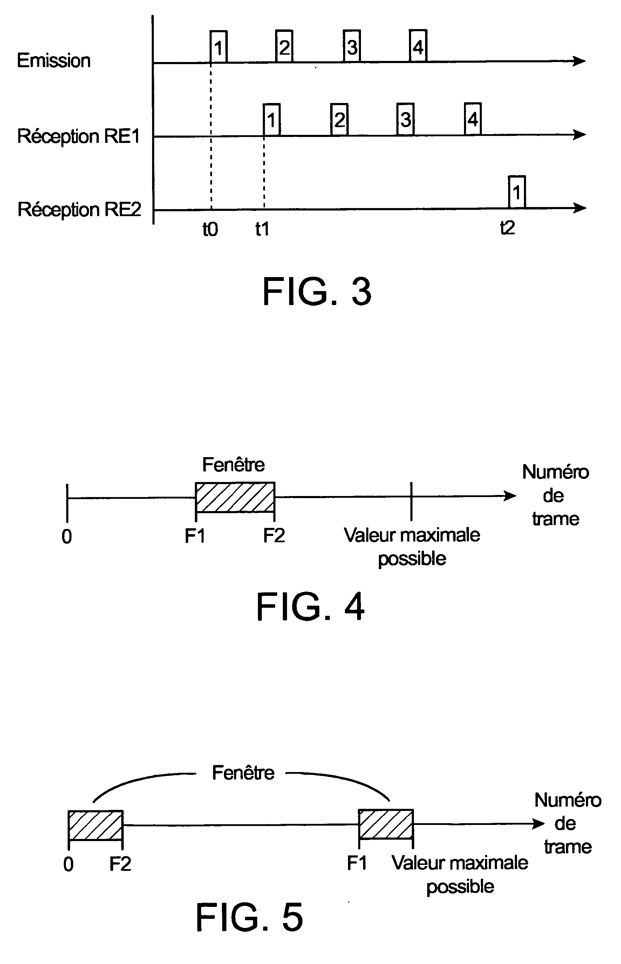

Comme représenté sur le figure 3, une trame 1, émise à un instant t0, arrive à l'équipement destinataire à un premier instant t1 par le premier réseau RE1 et à un second instant t2 par le second réseau RE2. La trame 1 reçue à l'instant t2 par ce second réseau peut arriver après que des trames 2, 3 et 4, pourtant émises ultérieurement à l'instant t0, soient arrivées à l'équipement destinataire par ledit premier réseau. L'équipement destinataire ne doit traiter qu'une seule fois l'information transmise en double sur chacun des réseaux RE1 et RE2 par l'équipement source. Une solution divulguée dans ce document référencé [2] consiste à ne prendre en considération que la première des deux trames identiques reçues par l'équipement destinataire. Pour cela, chaque trame émise par un équipement source comporte un numéro de trame permettant de l'identifier temporellement.

La présente invention a pour objet d'améliorer une telle solution en permettant d'obtenir la meilleure disponibilité possible de la communication entre un équipement source et un équipement destinataire, pour éviter en particulier tout blocage prolongé de cette communication.

Il existe d'autres documents de l'art antérieur, et notamment les trois suivants. Le document référencé [3] décrit un dispositif de distribution de messages dans un système de communication tolérant aux pannes permettant la communication de données en paquets. Ce dispositif comprend plusieurs moyens de traitement communiquant entre eux. Chacun de ces moyens de traitement est connecté aux autres moyens de traitement au travers d'au moins deux réseaux séparés physiquement. Dans chaque moyen de traitement des moyens de conservation d'informations permettent de garder des informations concerant les chemins de communication. Si de premiers messages d'information envoyés par des moyens de traitement émetteurs en utilisant au moins deux réseaux séparés n'arrivent pas dans une fenêtre de temps déterminé chez des moyens de traitement récepteurs, ces derniers émettent un message vers les moyens de traitement émetteurs pour indiquer qu'un des chemins parcouru contient une erreur.

Le document référencé [4] décrit un réseau local redondant, qui utilise deux câbles sur lesquels des informations dupliquées sont transmises en parallèle sous la forme de trames de messages identiques. Chaque récepteur sur le réseau comprend un circuit qui évalue les signaux provenant de ces deux câbles et sélectionne l'un de ces signaux.

Le document référencé [5] décrit un dispositif de priorité rotative dans un réseau Ethernet. Le procédé d'accès à ce réseau comprend:

- la détermination d'un nombre de stations sur le réseau,
- la transmission d'un paquet de données,
- l'attente, en réponse à cette étape de transmission, d'un délai incluant un intervalle de distance entre paquets et un multiple entier d'un intervalle de retard prédéterminé, cet entier dépendant du nombre de stations,
- la détermination d'une activité sur le réseau,
- la réinitialisation de ce délai en réponse à la détection d'une activité en décrémentant cet entier.

## EXPOSÉ DE L'INVENTION

L'invention concerne un procédé de gestion de la redondance d'un réseau de communication de type Ethernet full-duplex commuté comportant au moins deux réseaux élémentaires indépendants comprenant chacun au moins un équipement source et au moins un équipement destinataire reliés entre eux par au moins un lien physique au travers d'au moins un commutateur, chaque équipement étant relié à chaque réseau élémentaire, dans lequel chaque trame émise par un équipement source sur un lien virtuel d'un réseau élémentaire indépendant comporte un numéro compris dans un intervalle de valeurs numériques consécutives prédéterminé, caractérisé en ce qu'en réception, par un équipement destinataire, d'une trame sur un lien virtuel à un instant donné, ledit procédé comprend les étapes suivantes :

- une étape de définition, pour ce lien virtuel, d'une fenêtre de plusieurs valeurs numériques comprise dans ledit intervalle prédéterminé correspondant à des trames déjà reçues à cet instant donné,
- une étape de comparaison du numéro de la trame reçue avec les valeurs numériques de ladite fenêtre,
- une étape d'acceptation de la trame reçue lorsque le numéro de trame n'est pas compris dans ladite fenêtre.

Dans un premier mode de réalisation on a, en outre, les étapes suivantes :

- une étape d'initialisation d'un compteur à une valeur déterminée chaque fois qu'une trame reçue sur le lien virtuel considéré est acceptée par l'équipement destinataire,
- une étape de décrémentation de la valeur courante de ce compteur au fur et à mesure que le temps s'écoule,
- une étape d'acceptation par l'équipement destinataire de la trame suivante reçue sur le lien virtuel considéré si cette valeur courante arrive à zéro, même si le numéro de trame correspondant est compris dans ladite fenêtre.

Dans un second mode de réalisation, lors de l'étape de définition d'une fenêtre, on tient compte du débordement du numéro de trame.

Dans un troisième mode de réalisation on a des étapes préalables de comparaison du numéro d'une trame qui arrive à un équipement destinataire avec le numéro de la trame précédente, et de rejet cette trame si le numéro de cette trame n'est pas consécutif du numéro de la trame précédente.

Avantageusement l'équipement destinataire accepte les trames dont le numéro correspond au numéro de trame habituellement émis par l'équipement source après un "reset".

On peut dans tous les cas rejeter une trame reçue si cette trame a le même numéro que la trame précédemment reçue.

Un tel procédé peut avantageusement être utilisé dans le domaine avionique.

L'invention concerne également un réseau de communication redondant de type Ethernet full-duplex commuté comportant au moins deux réseaux élémentaires indépendants comprenant chacun au moins un équipement source et au moins un équipement destinataire reliés entre eux par au moins un lien physique au travers d'au moins un commutateur, chaque équipement étant relié à chaque réseau élémentaire, dans lequel chaque trame émise par un équipement source sur un lien virtuel d'un réseau élémentaire indépendant comporte un numéro compris dans un intervalle de valeurs numériques consécutives prédéterminé, caractérisé en ce qu'il comprend un module de gestion de redondance comportant :

- des moyens de définition, pour chaque trame reçue sur un lien virtuel à un instant donné, d'une fenêtre de plusieurs valeurs numériques comprise dans ledit intervalle prédéterminé, correspondant à des trames déjà reçues à cet instant donné,
- des moyens de comparaison du numéro de la trame reçue avec ladite fenêtre,
- des moyens d'acceptation de la trame reçue lorsque le numéro de trame n'est pas compris dans ladite fenêtre.

Ce réseau peut comprendre un compteur relié à ce module de gestion de redondance pouvant être réinitialisé par ce module et apte à informer celui-ci de son passage à zéro. Il peut également comprendre des modules de contrôle du séquencement des trames arrivant par les réseaux élémentaires indépendants.

## BRÈVE DESCRIPTION DES DESSINS

- La figure 1 illustre un réseau Ethernet de l'art connu,
- la figure 2 illustre le concept de lien virtuel dans un réseau Ethernet de l'art connu,
- la figure 3 illustre le fonctionnement d'un réseau Ethernet de l'art connu,
- la figure 4 illustre le procédé de l'invention,
- la figure 5 illustre un mode de réalisation avantageux du procédé de l'invention,
- la figure 6 illustre le réseau de communication redondant de l'invention.

## EXPOSÉ DÉTAILLÉ DE MODES DE RÉALISATION PARTICULIERS

Dans le procédé décrit dans le document référencé [2], chaque trame émise par un équipement source sur un lien virtuel d'un de plusieurs réseaux élémentaires indépendants de communication RE1, RE2... comporte une information de numéro de trame permettant une identification temporelle. Ce numéro de trame est compris dans un intervalle prédéterminé, par exemple de valeurs 0 à 255 qui correspond à un codage dudit numéro de trame sur un octet. Un équipement source envoie, sur chacun des réseaux élémentaires RE1, RE2, ..., des trames distinctes successives avec des numéros de trame consécutifs.

Dans le procédé de l'invention, lorsqu'un équipement destinataire reçoit une trame en provenance d'un équipement source sur un lien virtuel à un instant donné, on a les étapes suivantes :

- une étape de définition, pour ce lien virtuel, d'une fenêtre de numéros compris dans ledit intervalle prédéterminé, correspondant à des trames déjà reçues à cet instant donné, comme illustré sur la figure 4 ; cette fenêtre étant choisie en tenant compte des numéros des trames préalablement reçues ainsi que de la différence maximale de temps de réception entre deux trames émises simultanément sur deux réseaux élémentaires distincts (« skew» du réseau), de façon à s'assurer de ce que tous les numéros de cet intervalle prédéterminé situés hors de ladite fenêtre correspondent à des trames futures.
- une étape de comparaison du numéro de la trame reçue avec ladite fenêtre,
- une étape de prise en compte par l'équipement destinataire de cette trame uniquement si ce numéro de trame n'est pas compris dans la fenêtre, car cette trame n'a pas été déjà reçue antérieurement.

Par contre, si ce numéro est compris dans ladite fenêtre, la trame n'est pas prise en compte par l'équipement destinataire.

Ainsi, grâce au procédé de l'invention, lorsque du fait de la redondance du réseau un équipement destinataire reçoit plusieurs trames comportant un même numéro de trame, seule celle desdites trames reçue en premier est acceptée par l'équipement destinataire.

Dans un premier mode de réalisation avantageux du procédé de l'invention, on a de plus les étapes suivantes :

- une étape d'initialisation d'un compteur («timer») à une valeur prédéterminée chaque fois qu'une trame reçue sur le lien virtuel considéré est acceptée par l'équipement destinataire,
- une étape de décrémentation de la valeur courante de ce compteur au fur et à mesure que le temps s'écoule,
- une étape d'acceptation par l'équipement destinataire de la trame suivante reçue sur le lien virtuel considéré lors de la seconde étape du procédé si cette valeur courante arrive à zéro, même si le numéro de trame correspondant est compris dans ladite fenêtre.

Une telle caractéristique permet d'éviter un blocage prolongé de la réception des trames issues de l'équipement source, consécutivement à une réinitialisation de celui-ci (« reset »), susceptible de provoquer une discontinuité de la numérotation des trames émises sur le lien virtuel considéré. Ainsi, la durée pendant laquelle les trames reçues sont rejetées par l'équipement destinataire sur ce lien virtuel consécutivement à un "reset" de l'équipement source est au plus égale à la durée correspondant au décomptage du compteur de ladite valeur prédéterminée jusqu'à zéro. Il en découle une bonne disponibilité de la liaison entre l'équipement source et l'équipement destinataire sur ce lien virtuel.

Dans un second mode de réalisation avantageux illustré sur la figure 5, lors de l'étape de définition d'une fenêtre, on tient compte du débordement (« overflow ») du numéro de trame : lorsque celui-ci arrive à sa valeur maximale compte tenu de son codage (par exemple 255 s'il est codé sur un octet) il revient à zéro. Ainsi sur cette figure la fenêtre F1-F2 s'étend de part et d'autre de l'intervalle prédéterminé des numéros de trames.

Dans un troisième mode de réalisation avantageux de l'invention, dans une étape préalable du procédé de l'invention, on procède à un contrôle du séquencement des trames reçues sur chacun des réseaux élémentaires RE1, RE2... Lorsqu'une trame arrive à l'équipement destinataire par l'un desdits réseaux élémentaires, on compare le numéro de cette trame avec le numéro de la trame précédente arrivée par l'intermédiaire de ce même réseau élémentaire. Si le numéro de cette trame n'est pas consécutif du numéro de la trame précédente, l'équipement destinataire rejette cette trame. Sinon, on accepte cette trame quant au contrôle de séquencement et on procède alors aux étapes de définition, de comparaison et de prise en compte de trame considérées précédemment.

Ce mode de réalisation permet de rejeter des trames émises de façon aléatoire sur le réseau, par exemple en raison de perturbations dudit réseau, ou des trames qui se répètent de façon identique, par exemple en cas de blocage de l'équipement source. Cela permet donc d'améliorer la sécurité de fonctionnement.

De façon avantageuse, lors du contrôle de séquencement, l'équipement destinataire accepte les trames dont le numéro correspond au numéro de trame habituellement émis par l'équipement source après son "reset", par exemple zéro, même si ce numéro n'est pas consécutif du numéro de la trame précédemment reçue. Cela permet d'éviter de rejeter la première trame émise par l'équipement source après un "reset", ce qui contribue à une bonne disponibilité de la liaison. Toutefois, même dans ce cas, l'équipement destinataire rejette la trame reçue si le numéro de cette trame est identique à celui de la trame précédemment reçue, cette situation pouvant par exemple correspondre à un blocage de l'équipement source.

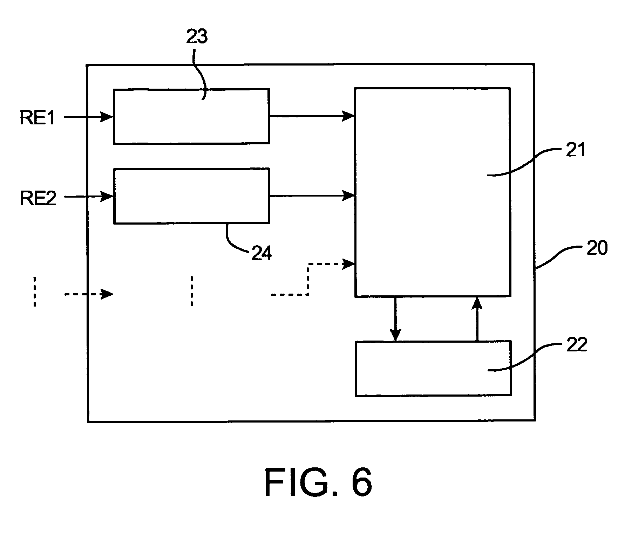

L'invention concerne aussi un réseau de communication redondant de type Ethernet full-duplex commuté permettant de mettre en oeuvre le procédé préalablement décrit. Comme représenté sur la figure 6, ce réseau 20 comporte un module de gestion de la redondance 21.

Dans un mode préféré de réalisation, ce réseau 20 comporte en outre un compteur 22 pouvant être initialisé par le module de gestion de la redondance 21 et apte à informer celui-ci de son passage à zéro.

Dans un autre mode préféré de réalisation, ce réseau 20 comporte aussi des modules 23, 24... de contrôle du séquencement des trames arrivant par les réseaux élémentaires RE1, RE2, ...

Exemple de réalisation du réseau de l'invention

Dans un exemple de réalisation, on considère deux réseaux élémentaires RE1 et RE2 sur lesquels un équipement source communique avec un équipement destinataire sur un lien virtuel. En fonction des caractéristiques desdits réseaux élémentaires, on sait déterminer un temps SKEWmax correspondant à l'écart maximal, en valeur absolue, entre les temps t1 et t2 nécessaires pour acheminer une trame de l'équipement source vers l'équipement destinataire respectivement sur ces réseaux élémentaires RE1 et RE2.

On définit un intervalle BAG comme le plus petit intervalle temporel possible entre deux trames consécutives lors de leur émission par l'équipement source. En pratique, l'intervalle entre deux trames consécutives lors de leur émission sera égal à N x BAG, N étant un nombre entier positif au moins égal à 1.

Soit RWS (« Reject Window Size ») la largeur de la fenêtre définie lors de l'étape de définition du procédé de l'invention. Dans cet exemple de réalisation, on choisit :

$$RWS = E(SKEWmax / BAG) +2, \text{ avec } E(...) = \text{partie entière}$$

Dans un mode particulier de réalisation de l'invention, on définit un opérateur de soustraction «-SN» permettant de gérer le débordement (« overflow ») du numéro de trame. Dans le cas où le numéro de trame est codé sur un octet (valeurs possibles : 0 à 255), cet opérateur de soustraction peut être défini de la façon suivante :

$$S_1 -_{SN} S_2 =_{def} ((S_1-S_2+ SN\_HALF) \mod SN\_CNT)-SN\_HALF$$

Ensuite on définit les opérateurs de comparaison basés sur cet opérateur -SN:

$$S_1 <_{SN} S_2 \quad \Leftrightarrow_{def} (S_1 -_{SN} S_2) < 0$$

$$S_1 =_{SN} S_2 \quad \Leftrightarrow_{def} (S_1 -_{SN} S_2) = 0$$

$$S_1 >_{SN} S_2 \quad \Leftrightarrow_{def} (S_1 -_{SN} S_2) > 0$$

Avec SN_HALF=128 et SN-CNT = 256

On utilise alors cet opérateur pour accepter ou refuser une trame arrivant à l'équipement destinataire, par exemple selon l'algorithme suivant :

```
if ((RSN >SN PSN) or (RSN <SN PSN - RWS) or timer_expired()){
    FLAG := true                    // Frame accepted
    PSN := RSN
    start_timer(SkewMax)
}else{
    FLAG := false                   //Frame discarded
}



    return FLAG
}
```

avec
RSN = (dernier) numéro de trame reçu
PSN = précédent numéro de trame reçu

Cet algorithme tient avantageusement compte du compteur 22 précité.

**REFERENCES**

**[1]** US 2003/0152077
**[2]** US 2003/0147377
**[3]** WO 99/63701
**[4]** US-A-4 780 869
**[5]** US-A-5 784 375

**Revendications**

1. Procédé de gestion de la redondance d'un réseau de communication de type Ethernet full-duplex commuté comportant au moins deux réseaux élémentaires indépendants (RE1, RE2) comprenant chacun au moins un équipement source (13) et au moins un équipement destinataire (14) reliés entre eux par au moins un lien physique au travers d'au moins un commutateur, chaque équipement étant relié à chaque réseau élémentaire, dans lequel chaque trame émise par un équipement source sur un lien virtuel d'un réseau élémentaire indépendant comporte un numéro compris dans un intervalle de valeurs numériques consécutives prédéterminé, **caractérisé en ce qu'**en réception, par un équipement destinataire, d'une trame sur un lien virtuel à un instant donné, ledit procédé comprend les étapes suivantes :

   - une étape de définition, pour ce lien virtuel, d'une fenêtre de plusieurs valeurs numériques comprise dans ledit intervalle prédéterminé, correspondant à des trames déjà reçues à cet instant donné,
   - une étape de comparaison du numéro de la trame reçue avec les valeurs numériques de ladite fenêtre,
   - une étape de prise en compte de la trame reçue lorsque le numéro de trame n'est pas compris dans ladite fenêtre,

   et **en ce que** l'on a, de plus, les étapes suivantes :

   - une étape d'initialisation d'un compteur à une valeur déterminée chaque fois qu'une trame reçue sur le lien virtuel considéré est acceptée par l'équipement destinataire,
   - une étape de décrémentation de la valeur courante de ce compteur au fur et à mesure que le temps s'écoule,
   - une étape d'acceptation par l'équipement destinataire de la trame suivante reçue sur le lien virtuel considéré, lors de l'étape de comparaison, si cette valeur courante arrive à zéro, même si le numéro de trame correspondant est compris dans ladite fenêtre.

2. Procédé selon la revendication 1, dans lequel la fenêtre de numéros de trames, comprise dans l'intervalle prédéterminé, est choisie en tenant compte des numéros de trames préalablement reçues ainsi que de la différence maximale de temps de réception entre deux trames émises simultanément sur deux réseaux élémentaires distincts de façon à s'assurer de ce que tous les numéros de cet intervalle situés hors de cette fenêtre correspondent à des trames futures.

3. Procédé selon la revendication 1, dans lequel, lors de l'étape de définition d'une fenêtre, on tient compte du débordement du numéro de trame.

4. Procédé selon la revendication 1, comportant des étapes préalables de comparaison du numéro d'une trame qui arrive à un équipement destinataire avec le numéro de la trame précédente, et de rejet de cette trame si le numéro de cette trame n'est pas consécutif du numéro de la trame précédente.

5. Procédé selon la revendication 4, dans lequel l'équipement destinataire accepte les trames dont le numéro correspond au numéro de trame habituellement émis par l'équipement source après un "reset".

6. Procédé selon la revendication 4, dans lequel on rejette une trame reçue si cette trame a le même numéro que la trame précédemment reçue.

7. Procédé selon l'une quelconque des revendications précédentes qui est utilisé dans le domaine avionique.

8. Réseau de communication redondant de type Ethernet full-duplex commuté comportant au moins deux réseaux élémentaires indépendants (RE1, RE2) comprenant chacun au moins un équipement source (13) et au moins un équipement destinataire (14) reliés entre eux par au moins un lien physique au travers d'au moins un commutateur, chaque équipement étant relié à chaque réseau élémentaire, dans lequel chaque trame émise par un équipement source sur un lien virtuel d'un réseau élémentaire indépendant comporte un numéro compris dans un intervalle de valeurs numériques consécutives prédéterminé, **caractérisé en ce qu'**il comprend un module de gestion de redondance (21) comportant :

- des moyens de définition, pour chaque trame reçue sur un lien virtuel à un instant donné, d'une fenêtre de plusieurs valeurs numériques comprise dans ledit intervalle prédéterminé correspondant à des trames déjà reçues à cet instant donné,
- des moyens de comparaison du numéro de la trame reçue avec les valeurs de numériques de ladite fenêtre,
- des moyens d'acceptation de la trame reçue lorsque le numéro de trame n'est pas compris dans ladite fenêtre,

et **en ce qu'**il comprend, en outre, un compteur (22) relié à ce module de gestion de redondance (21) initialisé par celui-ci et apte à l'informer de son passage à zéro.

9. Réseau selon la revendication 8, dans lequel la fenêtre de numéros de trames, comprise dans intervalle prédéterminé, est choisie en tenant compte des numéros de trames préalablement reçues ainsi que de la différence maximale de temps de réception entre deux trames émises simultanément sur deux réseaux élémentaires distincts de façon à s'assurer de ce que tous les numéros de cet intervalle situés hors de cette fenêtre correspondent à des trames futures.

10. Réseau selon la revendication 8, qui comprend des modules (23, 24) de contrôle du séquencement des trames arrivant par les réseaux élémentaires indépendants (RE1, RE2).

**Claims**

1. Redundancy management method of a switched full-duplex Ethernet communication network that includes at least two independent elementary networks (RE1, RE2) each of which includes at least one source equipment (13) and at least one destination equipment (14) interlinked by at least one physical link through at least one switch; each equipment piece being linked to each elementary network, in which each frame transmitted by a source equipment over a virtual link of an independent elementary network includes a number within a predetermined interval of consecutive numerical values, **characterized** during reception by a destination equipment of a frame over a virtual link at a given instant, said method includes the following steps:

- a step for defining, for this virtual link, a window of several numerical values included within said predetermined interval corresponding to the frames already received at this given instant,
- a step for comparing the number of the frame received with said window,
- a step for accepting the received frame when the frame number is not included in said window,

and in that additionally there are the following steps:

- a step for initializing a timer at a specific value each time that a frame received over the virtual link in question is accepted by the destination equipment,
- a step for decreasing the current value of this timer over time,
- a step for accepting by the destination equipment of the following frame received over the virtual link in question if this current value is reset to zero.

2. Method according to claim 1, wherein the window of frame numbers, included in the predetermined interval is chosen by taking into account the numbers of the previously received frames, as well as the maximum time reception difference between two frames transmitted simultaneously over two distinct elementary networks in order to ensure that all the number of this interval found outside this window correspond to future frames.

3. Method according to claim 1, wherein during the step for defining a window, the overflow of the frame number is taken into account.

4. Method according to claim 1, which includes previous steps for comparing the number of a frame that arrives at a destination equipment with the number of the previous frame, and for rejecting this frame if the number of this frame is not consecutive to the number of the previous frame.

5. Method according to claim 4, wherein the destination equipment accepts the frames whose number corresponds to the number of the frame normally sent by the source equipment after a reset.

6. Method according to claim 4, wherein a received frame is rejected if this frame has the same number as the previously received frame.

7. Method according to any of the previous claims that is used in the avionics field.

8. Switched full-duplex Ethernet type redundant communication network that includes at least two independent elementary networks (RE1, RE2) each of which includes at least one source equipment (13) and at least one destination equipment (14) interlinked by at least one physical link through at least one switch; each equipment piece being linked to each elementary network, in which each frame transmitted by a source equipment over a virtual link of an independent elementary network includes a number within a predetermined interval of consecutive numerical values, **characterized in that** it includes a redundancy management module (21) that includes:

- means for defining, for each frame received over a virtual link at a given instant, a window of several numerical values included within said predetermined interval, corresponding to the frames already received at that given instant,
- means for comparing the number of the received frame with said window,
- means for accepting the received frame when the frame number is not included in said window,
and **in that** it also comprises a timer (22) linked to said redundancy management module (21) initialized by the latter and able to inform it of its resetting.

9. Network according to claim 8, wherein the window of frame numbers, included in the predetermined interval, is chosen by taking into account the numbers of the previously received frames, as well as the maximum time reception difference between two frames simultaneously transmitted over two distinct elementary networks in order to ensure that all the numbers of this interval located outside this window correspond to future frames.

10. Network according to claim 8, which includes modules (23, 24) for controlling the sequencing of the frames that arrive through the independent elementary networks (RE1, RE2).

**Patentansprüche**

1. Redundanz-Steuerungsverfahren eines Datenkommunikationsnetzes vom Vollduplexschaltungs-Ethernet-Typ, mit mindestens zwei elementaren unabhängigen Netzen (RE1,RE2), die jeweils mindestens eine Quelleinrichtung (13) und mindestens eine Empfangseinrichtung (14) aufweisen, die untereinander durch mindestens eine physische Verbindung über mindestens einen Schalter verbunden sind, wobei jede Anlage mit jedem elementaren Netz verbunden ist, und jeder Daten(übertragungs)block, der von einer Quelleinrichtung auf einer virtuellen Verbindung eines unabhängigen elementaren Netzes gesendet wird, eine Nummer aufweist, die in einem vorbestimmten Intervall von konsekutiven digitalen Werten enthalten ist,
**dadurch gekennzeichnet, dass** beim Empfang eines Datenblocks durch eine Empfangseinrichtung (14) über eine virtuelle Verbindung in einem gegebenen Augenblick das Verfahren die folgenden Schritte umfasst:

- einen Definitionsschritt, für diese virtuelle Verbindung, eines Fensters aus mehreren digitalen Werten, die in dem vorbestimmten Intervall enthalten sind, welches in diesem gegeben Augenblick bereits empfangenen Datenblöcken entspricht,
- einen Vergleichsschritt der empfangenen Datenblocknummer mit den digitalen Werten des Fensters,
- einen Zählschritt des empfangenen Datenblocks, wenn die Datenblocknummer nicht in dem Fenster enthalten ist,
und **dadurch**, dass außerdem die folgenden Schritte erfolgen:
- ein Initialisierungsschritt eines Zählers mit einem vorbestimmten Wert jedes Mal dann, wenn ein über die betreffende virtuelle Verbindung empfangener Datenblock von der Empfangseinrichtung akzeptiert wird,
- ein Dekrementierschritt des aktuellen Wertes dieses Zählers während des Zeitablaufs,
- einen Akzeptierungsschritt durch die Empfangseinrichtung des über die betreffende virtuelle Verbindung empfangenen folgenden Datenblocks während des Vergleichsschritts, wenn dieser aktuelle Wert bei Null ankommt, auch wenn die entsprechende Datenblocknummer in dem Fenster enthalten ist.

**2.** Verfahren nach Anspruch 1, wobei das Datenblocknummernfenster, welches in dem vorbestimmten Intervall enthalten ist, unter Berücksichtigung der vorher empfangenen Datenblocknummern sowie der maximalen Zeitdifferenz beim Empfang zwischen zwei gleichzeitig auf zwei unterschiedlichen Elementarnetzen gesendeten Datenblöcken so gewählt wird, dass sichergestellt wird, dass alle Nummern dieses Intervalls, die sich außerhalb dieses Fensters befinden, zukünftigen Datenblöcken entsprechen.

**3.** Verfahren nach Anspruch 1, wobei während des Definitionsschritts eines Fensters der Überlauf der Datenblocknummer berücksichtigt wird.

**4.** Verfahren nach Anspruch 1, mit den vorangehenden Schritten des Vergleichs der Nummer eines Datenblocks, der an einer Empfangseinrichtung ankommt, mit der Nummer des vorangehenden Datenblocks, sowie der Zurückweisung dieses Datenblocks, wenn die Nummer dieses Datenblocks nicht auf die Nummer des vorangehenden Datenblocks folgt.

**5.** Verfahren nach Anspruch 4, wobei die Empfangseinrichtung Datenblöcke akzeptiert, deren Nummer der Datenblocknummer entspricht, welche für gewöhnlich von der Quelleinrichtung nach einem "Reset" gesendet wird.

**6.** Verfahren nach Anspruch 4, wobei ein empfangener Datenblock zurückgewiesen wird, wenn dieser Datenblock die gleiche Nummer aufweist wie der vorher empfangene Datenblock.

**7.** Verfahren nach einem der vorangehenden Ansprüche, das auf dem Gebiet der Luftfahrt angewendet wird.

**8.** Redundantes Kommunikationsnetz vom Vollduplexschaltungs-Ethernet-Typ mit mindestens zwei unabhängigen elementaren Netzen (RE1,RE2), die jeweils mindestens eine Quelleinrichtung (13) und mindestens eine Empfangseinrichtung (14) aufweisen, die untereinander durch mindestens eine physische Verbindung über mindestens einen Schalter verbunden sind, wobei jede Anlage mit jedem elementaren Netz verbunden ist, und jeder Daten(übertragungs)block, der von einer Quelleinrichtung auf einer virtuellen Verbindung eines unabhängigen elementaren Netzes gesendet wird, eine Nummer aufweist, die in einem vorbestimmten Intervall von konsekutiven digitalen Werten enthalten ist, **dadurch gekennzeichnet, dass** es ein Redundanz-Steuermodul (21) umfasst, das aufweist:

- Mittel zur Definition, für jeden auf einer virtuellen Verbindung in einem gegebenen Augenblick empfangenen Datenblock, eines Fensters aus mehrere digitalen Werten, das in dem vorbestimmten Intervall enthalten ist, welches den in diesem gegebenen Augenblick bereits empfangenen Datenblöcken entspricht,
- Mittel zum Vergleichen der empfangenen Datenblocknummer mit den digitalen Werten des Fensters,
- Mittel zum Akzeptieren des empfangenen Datenblocks, wenn die Datenblocknummer nicht in dem Fenster enthalten ist,
und **dadurch**, dass es außerdem umfasst:
- einen Zähler (22), der mit diesem Redundanz-Steuermodul (21) verbunden ist, das durch ihn initialisiert wird und das ihn über seinen Null-Durchgang informieren kann.

**9.** Netz nach Anspruch 8, wobei das Datenblocknummernfenster, welches in dem vorbestimmten Intervall enthalten ist, unter Berücksichtigung der vorher empfangenen Datenblocknummern sowie der maximalen Zeitdifferenz beim Empfang zwischen zwei gleichzeitig auf zwei unterschiedlichen Elementarnetzen gesendeten Datenblöcken so gewählt wird, dass sichergestellt wird, dass alle Nummern dieses Intervalls, die sich außerhalb dieses Fensters befinden, zukünftigen Datenblöcken entsprechen.

**10.** Netz nach Anspruch 8, welches Module (23,24) zur Steuerung der Abfolge der über die unabhängigen elementaren Netze (RE1,RE2) ankommenden Datenblöcke umfasst.

FIG. 1

FIG. 2

Emission

Réception RE1

Réception RE2

t0    t1                              t2

# FIG. 3

Fenêtre

Numéro
de
trame

0         F1    F2      Valeur maximale
possible

# FIG. 4

Fenêtre

Numéro
de
trame

0   F2                    F1   Valeur maximale
possible

# FIG. 5

FIG. 6

**EP 1 545 065 B1**

## RÉFÉRENCES CITÉES DANS LA DESCRIPTION

**Documents brevets cités dans la description**

- US 20030152077 A
- US 20030147377 A
- WO 9963701 A

- US 4780869 A
- US 5784375 A